# EUROPÄISCHE PATENTSCHRIFT

(11) **EP 1 342 343 B1**
(45) Veröffentlichungstag und Bekanntmachung des Hinweises auf die Patenterteilung: **08.11.2006**
(21) Anmeldenummer: 01994822.3
(22) Anmeldetag: 20.12.2001
(51) Int. Cl.: H04L 12/24, H04L 29/12

(54) **AUTOMATISCHE KONFIGURATION VON KOMPONENTEN EINES NETZWERKES**
AUTOMATIC CONFIGURATION OF NETWORK COMPONENTS
CONFIGURATION AUTOMATIQUE DE COMPOSANTS D'UN RESEAU

(30) Priorität: 23.12.2000 DE 10065158
(43) Veröffentlichungstag der Anmeldung: 10.09.2003
(73) Patentinhaber: Hirschmann Electronics GmbH & Co. KG, 72654 Neckartenzlingen (DE)
(72) Erfinder: REISTER, Klaus, 73265 Dettingen (DE)
(74) Vertreter: Thul, Hermann
(86) Internationale Anmeldenummer: PCT/EP2001/015161
(87) Internationale Veröffentlichungsnummer: WO 2002/052791

(56) Entgegenhaltungen:
- EP-A- 0 959 587
- WO-A-96/01456
- FR-A- 2 783 660

## Beschreibung

### Technisches Gebiet

Die Erfindung betrifft ein Verfahren und eine Vorrichtung zur Konfiguration einer Netzwerkkomponente eines Netzwerkes gemäß den Merkmalen des jeweiligen Oberbegriffes der unabhängigen Patentansprüche.

### Stand der Technik

Es ist allgemein bekannt, daß ein Netzwerk aus Endgeräten (netzwerkfähige Geräte wie z.B. PCs, Eingabe- oder Ausgabemittel oder dergleichen) Daten über Netzwerkkomponenten (wie beispielsweise einen Ethernet Switch) austauschen. Beim Anschluß an solche Netzwerke und zur Inbetriebnahme müssen bei den Endgeräten und auch bei den Netzwerkkomponenten selber Kommunikations- und Betriebsparameter konfiguriert werden, bevor ein Datenaustausch über das Netzwerk und der reguläre Betrieb möglich sind. Die Art der Konfiguration der Parameter ist vom Typ des Netzwerkes abhängig und kann einfach oder aufwendig sein, manuell oder teilautomatisiert durchgeführt werden und stellt demzufolge unterschiedliche Anforderungen an die Qualifizierung des Bedienpersonals.

Eine wichtige Anforderung vor allem im Betrieb der Steuerungs- und Automatisierungstechnik ist der rasche Austausch ausgefallener Geräte oder Netzwerkkomponenten, um kostenintensive Stillstandszeiten der zu steuernden Anlagen oder Systeme möglichst gering zu halten. Die ausgetauschten Geräte oder Komponenten müssen vor ihrer Inbetriebnahme in gleicher Weise wie das ausgefallene Teil konfiguriert werden, um nach dem Austausch deren Funktion übernehmen zu können. So beschränkt sich die Konfiguration der Kommunikationsparameter von Feldbus fähigen Geräten lediglich darauf, das einige wenige Schalter eingestellt werden, was auch von geringer qualifiziertem Personal durchgeführt werden kann.

In neuerer Zeit werden die eigentlich für den Bereich der Bürokommunikation entwickelten Netzwerkstandards (wie beispielsweise Ethernet, lokale Brücken nach IEE802.1 und die TCP/IP-Protokollfamilie) vermehrt für Steuerungs- und Automatisierungsaufgaben eingesetzt. Die Konfiguration der Kommunikations- und Betriebsparameter von Geräten- und Netzwerkkomponenten ist für dieses Netzwerkumfeld wesentlich komplexer und umfangreicher als bei Feldbussen. Dies ist vielleicht noch innerhalb der Bürokommunikation hinnehmbar, da dort qualifiziertes Personal zur Verfügung steht und Stillstandszeiten wenig kritisch sind. Eine umfangreiche Konfiguration kann aber im Bereich der Steuerungs- und Automatisierungstechnik nicht hingenommen werden, da hier einerseits die Stillstandszeiten kostenintensiv sind und im Regelfall qualifiziertes Personal nicht zur Verfügung steht.

Aus der EP-A-0 959 587 ist ein gattungsbildendes Verfahren zur Konfiguration von Netzwerkkomponenten innerhalb eines Netzwerkes bekannt, wobei eine Konfiguration von zumindest einer Netzwerkkomponente zunächst auf einem Speicher innerhalb des Netzwerkes abgespeichert ist und bei Austausch der Netzwerkkomponente die abgespeicherte Konfiguration auf eine Ersatzkomponente übertragen wird. Diese Neukonfiguration einer ausgewechselten Netzwerkkomponente findet über das Netzwerk selber statt, was nicht für jede Bedienperson möglich ist und darüber hinaus aufgrund der zu übertragenden Daten zeitaufwändig ist.

Die FR-A-2 783 660 beschreibt als Endgerät einen Telefonapparat, der über eine Steckkarte seine Betriebsdaten erhält.

### Darstellung der Erfindung

Der Erfindung liegt daher die Aufgabe zugrunde, für dieses Netzwerkumfeld ein Verfahren sowie eine Vorrichtung zur Konfiguration von Endgeräten und Netzwerkkomponenten anzugeben, mit dem die eingangs geschilderten Nachteile vermieden werden.

Diese Aufgabe ist durch die Merkmale der unabhängigen Patentansprüche gelöst.

Erfindungsgemäß ist ein Verfahren vorgesehen, bei dem nach dem Austausch ein Konfigurations-Adapter in eine Schnittstelle der Ersatzkomponente eingesteckt wird, wobei die neu eingesetzte Netzwerkkomponente automatisch mit der in dem Adapter abgespeicherten Konfiguration versorgt und gestartet wird. Damit wird die Netzwerkkomponente plug-and-play-fähig gemacht, um eine Ersatzkomponente ohne weiteren Aufwand, insbesondere ohne Zuhilfenahme von qualifiziertem Personal im Netzwerk austauschen zu können, wobei gleichzeitig die ursprüngliche Konfiguration in der ausgetauschten Netzwerkkomponente eingestellt wird. Damit wird es möglich, daß nach der Inbetriebnahme des Netzwerkes, wenn kein entsprechend geschultes Personal mehr zur Verfügung steht oder nur in nicht ausreichend kurzer Zeit, die bei der Inbetriebnahme der Anlage vorgenommene Konfiguration in diesem Fehlerfall auf die Ersatzkomponenten zu übertragen. Die Konfiguration wird also bei der Inbetriebnahme einer Anlage von qualifiziertem Personal vorgenommen, d.h. es werden alle benötigten Informationen über die Kommunikations- und Betriebsparameter der Netzwerkkomponenten abgespeichert. Danach können diese Parameter durch einen einfachen manuellen Eingriff auf die Ersatzkomponenten übertragen werden.

In Weiterbildung der Erfindung erfolgt die Abspeicherung in einem Adapter, der nach dem Austausch der Netzwerkkomponente mit der Ersatzkomponente verbindbar ist und mindestens eine eindeutige Kennung zur Konfiguration der Ersatzkomponente liefert. Soll innerhalb der Topologie des Netzwerkes eine Netzwerkkomponente ausgetauscht werden (z.B. wegen eines Defektes), wurde vorher während des fehlerfreien Betriebes oder bei Inbetriebnahme die eingestellte Konfiguration in einem Speichermittel des Adapters abgelegt. Nach dem Austausch der Netzwerkkomponente kann diese abgespeicherte Konfiguration ohne weiteres durch Verbindung des Adapters mit der Schnittstelle der Komponente übertragen werden, so daß die Ersatzkomponente sofort und ohne weiteres einsatzbereit ist. Damit bleiben z.B. nicht nur ursprünglich vom Werk oder Hersteller abgespeicherte Konfigurationen erhalten, sondern auch veränderte Konfigurationen, die gerade bei komplexen Netzwerken erforderlich sind und oftmals von der Werkseinstellung abweichen.

In Weiterbildung der Erfindung ist vorgesehen, daß der Adapter, insbesondere ein serieller Adapter ohne eigene Spannungsversorgung, in eine Schnittstelle, insbesondere in eine serielle Schnittstelle, der Komponente bzw. der Ersatzkomponente eingesteckt wird. Dadurch ist ohne weiteres eine schnelle und unkomplizierte Datenübertragung möglich, um die in dem Adapter abgespeicherte Konfiguration an die Ersatzkomponente zu übertragen. Die gesamte Konfiguration, wie insbesondere die Betriebs- und Kommunikationsparameter der Komponente, sind auf einem Speicher, insbesondere einem EEPROM, des Adapters abgespeichert.

In Weiterbildung der Erfindung erhält der Adapter im eingesetzten Zustand seine Stromversorgung von der Netzwerkkomponente. Dadurch ist der Adapter jederzeit einsatzbereit und kann über einen langen Zeitraum während des Netzwerkbetriebes verwendet werden.

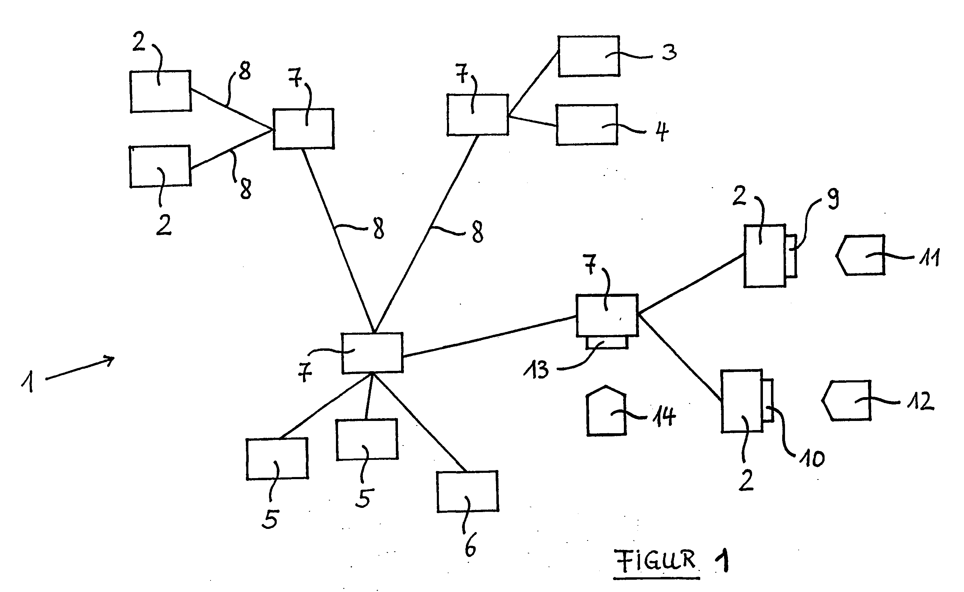

Im folgenden ist das Verfahren sowie eine beispielhafte Vorrichtung (Netzwerk) beschrieben und anhand der einzigen Figur erläutert.

### Kurze Beschreibung der Zeichnung

In der Figur ist ein Netzwerk 1 gezeigt, das in beliebiger Anzahl und an beliebigen Orten ein oder mehrere Endgeräte 2 (wie z.B. PC) aufweist. Unter den Begriff Endgerät fallen auch Eingabeeinheiten 3, Ausgabeeinheiten 4, Sensoren 5 sowie Aktuatoren 6 und weitere vergleichbare entsprechende Mittel. Die Anzahl und der Ort der genannten Endgeräte hängt von der Topologie des Netzwerkes ab. In Betracht kommen beispielsweise als Einsatzfelder die Steuerung oder Regelung von verfahrenstechnischen Anlagen oder sonstige Anwendungen in der Steuerungs- und Automatisierungstechnik sowie innerhalb der Bürokommunikation. Dies stellt jedoch keine Beschränkung des Einsatzgebietes der vorliegenden Erfindung dar.

### Wege zur Ausführung der Erfindung

Die beschriebenen Endgeräte mit den Bezugsziffern 2 bis 6 sind entweder einzeln oder in Gruppen an Netzwerkkomponenten 7 angeschlossen. Je nach Art und Ort des Endgerätes erfolgt ein Datenaustausch zwischen dem jeweiligen Endgerät und dem zugehörigen Netzwerk 7 über eine Datenleitung 8, wobei innerhalb des Netzwerkes 1 gleichartige oder unterschiedliche Datenleitungen 8 zum Einsatz kommen können.

Zum Beispiel zwei Endgeräte 2 (oder nur ein Endgeräte oder mehr als zwei oder aller Endgeräte des Netzwerkes 1) weisen jeweils eine Schnittstelle 9 bzw. 10 auf, bei denen es sich insbesondere um serielle Schnittstellen handelt. Mit den Bezugsziffern 11 und 12 sind an dem jeweiligen Endgerät 2 die Adapter 11 und 12 vorhanden. Für mehrere Endgeräte können auch verschiedene Adapter zum Einsatz kommen. Je nach Komplexität des Netzwerkes und Art der Endgeräte kann auch für jedes Endgerät ein Adapter vorhanden sein, die wiederum gleich oder unterschiedlich in der Bauart sind. Gleiches gilt auch die den Netzwerkkomponenten zugeordneten Adapter. Denn wenigstens eine Netzwerkkomponente 7 (insbesondere alle Netzwerkkomponenten) weist (weisen) eine (insbesondere serielle) Schnittstelle 13 mit einem zugehörigen Adapter 14 auf. Bei Inbetriebnahme des Netzwerkes 1 wurde die Konfiguration der Endgeräte und der zugehörigen Netzwerkkomponenten in den Adaptern 11 und 12 (wobei auch mehr oder weniger Adapter vorhanden sein können) abgespeichert. Stellt sich nun heraus, dass ein Endgerät 2 beispielsweise wegen eines Defektes oder einer Modernisierung ausgetauscht werden soll (oder eine Netzwerkkomponente 7), so kann ohne weiteres ein Austausch erfolgen, wobei danach der zugehörige Adapter mit dem neuen Endgerät oder der neuen Netzwerkkomponente verbunden wird und somit die zugehörige Konfiguration eingestellt wird. Dies erfolgt während des BOOT-Vorganges, wobei der aufgesteckte Adapter auf seinem Speicher (insbesondere dem EEPROM) eine eindeutige Kennung abgespeichert hat mit der die Konfiguration mittels geeignetem Protokoll von einem Server geholt werden kann oder die gesamte Konfiguration von dem Adapter aus geladen werden kann. Der Adapter erhält dabei seine Spannungsversorgung von dem zugehörigen Endgerät bzw. der Netzwerkkomponente, die beispielsweise ein Ethernet-Switch sein kann.

Es wird also ein Verfahren und eine Vorrichtung zur Konfiguration von Endgeräten und Netzwerkkomponenten innerhalb eines Netzwerkes zur Verfügung gestellt, wobei zum Austausch eines Gerätes bzw. einer Komponente kein Fachpersonal (Spezialist) benötigt wird. Das Bedienpersonal tauscht lediglich ein Endgerät bzw. eine Netzwerkkomponente aus und steckt einen Konfigurations-Adapter in die serielle Schnittstelle, wobei das neu eingesetzte Endgerät bzw. die Netzwerkkomponente automatisch mit der abgespeicherten Konfiguration versorgt und gestartet wird.

### Bezugszeichenliste:

- 1.: Netzwerk
- 2.: Endgerät
- 3.: Eingabeeinheit
- 4.: Ausgabeeinheit
- 5.: Sensor
- 6.: Aktuator
- 7.: Netzwerkkomponente
- 8.: Datenleitung
- 9.: Schnittstelle
- 10.: Schnittstelle
- 11.: Adapter
- 12.: Adapter
- 13.: Schnittstelle
- 14.: Adapter

## Patentansprüche

1. Verfahren zur Konfiguration von Netzwerkkomponenten innerhalb eines Netzwerkes, wobei eine Konfiguration von zumindest einer Netzwerkkomponente zunächst abgespeichert ist und bei Austausch der Netzwerkkomponente die abgespeicherte Konfiguration auf eine Ersatzkomponente übertragen wird, **dadurch gekennzeichnet, dass** die Abspeicherung in einen Konfigurations-Adapter erfolgt, **dass** nach dem Austausch der Konfigurations-Adapter in eine Schnittstelle der Ersatzkomponente eingesteckt wird, wobei die neu eingesetzte Netzwerkkomponente automatisch mit der in dem Konfigurations-Adapter abgespeicherten Konfiguration versorgt und gestartet wird.

2. Verfahren nach Anspruch 1, **dadurch gekennzeichnet, daß** der Adapter mindestens eine eindeutige Kennung zur Konfiguration der Ersatzkomponente liefert.

3. Verfahren nach Anspruch 2, **dadurch gekennzeichnet, daß** der Adapter, insbesondere ein serieller Adapter ohne eigene Spannungsversorgung, in eine Schnittstelle, insbesondere in eine serielle Schnittstelle, der Komponente bzw. der Ersatzkomponente eingesteckt wird.

4. System zur Konfiguration von Netzwerkkomponenten (7) eines Netzwerkes (1) wobei das System einen Adapter, eine Netzwerkkomponente und eine Ersatzkomponente umfasst, wobei die Netzwerkkomponente (7) eine Schnittstelle (9, 10, 13) aufweist, die derart mit dem Adapter (11, 12, 14) verbindbar ist, daß die Abspeicherung der ursprünglichen Konfiguration in dem Adapter (11, 12, 14) erfolgt, und wobei den Adapter mit der Netzwerkkomponente (7) sowie nach Austausch mit der Ersatzkomponente verbindbar ist, um die ursprüngliche Konfiguration in der Ersatz komponente einzustellen.

5. Vorrichtung nach Anspruch 4, **dadurch gekennzeichnet, daß** der Adapter (11, 12, 14) im eingesteckten Zustand seine Stromversorgung von der Netzwerkkomponente (7) erhält.

6. Vorrichtung nach Anspruch 4 oder 5, **dadurch gekennzeichnet, daß** die Netzwerkkomponente (7) ein Ethernet-Switch ist.

## Claims

1. Method for configuring network components within a network, where a configuration for at least one network component is first of all stored and when the network component is interchanged the stored configuration is transferred to a replacement component, **characterized in that** the storage is effected in a configuration adapter, **in that** following the interchange the configuration adapter is plugged into an interface on the replacement component, the newly used network component automatically being supplied and started with the configuration stored in the configuration adapter.

2. Method according to Claim 1, **characterized in that** the adapter provides at least one unique identifier for configuring the replacement component.

3. Method according to Claim 2, **characterized in that** the adapter, particularly a serial adapter without its own power supply, is plugged into an interface, particularly into a serial interface, on the component or on the replacement component.

4. System for configuring network components (7) in a network (1), where the system comprises an adapter, a network component and a replacement component, where the network component (7) has an interface (9, 10, 13) which can be connected to the adapter (11, 12, 14) such that the original configuration is stored in the adapter (11, 12, 14), and where the adapter can be connected to the network component (7) and, following interchange, to the replacement component in order to set the original configuration in the replacement component.

5. System according to Claim 4, **characterized in that** the adapter (11, 12, 14), having been plugged in, receives its power supply from the network component (7).

6. System according to Claim 4 or 5, **characterized in that** the network component (7) is an Ethernet switch.

## Revendications

1. Procédé de configuration de composants de réseau au sein d'un réseau, une configuration d'au moins un composant de réseau étant tout d'abord mémorisée et, en cas de remplacement du composant de réseau, la configuration mémorisée étant transmise à un composant de rechange, **caractérisé en ce que** la mémorisation s'effectue dans un adaptateur de configuration, qu'après le remplacement, l'adaptateur de configuration est inséré dans une interface du composant de rechange, le nouveau composant de réseau installé étant automatiquement alimenté et démarré avec la configuration mémorisée dans l'adaptateur de configuration.

2. Procédé selon la revendication 1, **caractérisé en ce que** l'adaptateur délivre au moins un identifiant explicite pour la configuration du composant de rechange.

3. Procédé selon la revendication 2, **caractérisé en ce que** l'adaptateur, notamment un adaptateur série sans alimentation électrique propre, est inséré dans une interface, notamment dans une interface série, du composant ou du composant de rechange.

4. Système de configuration de composants de réseau (7) d'un réseau (1), le système comprenant un adaptateur, un composant de réseau et un composant de rechange, le composant de réseau (7) présentant une interface (9, 10, 13) qui peut être reliée avec l'adaptateur (11, 12, 14) de telle sorte que soit effectuée la mémorisation de la configuration originelle dans l'adaptateur (11, 12, 14) et l'adaptateur pouvant être relié avec le composant de réseau (7) et, après le remplacement, avec le composant de rechange pour établir la configuration originelle dans le composant de rechange.

5. Système selon la revendication 4, **caractérisé en ce que** l'adaptateur (11, 12, 14), en position insérée, reçoit son alimentation électrique du composant de réseau (7).

6. Système selon la revendication 4 ou 5, **caractérisé en ce que** le composant de réseau (7) est un commutateur Ethernet.
